# EUROPEAN PATENT SPECIFICATION

(11) **EP 4 116 568 B1**
(45) Date of publication and mention of the grant of the patent: **20.05.2026**
(21) Application number: 21184042.6
(22) Date of filing: 06.07.2021
(51) Int. Cl.: F02M 21/02, F01N 5/00, F02B 47/02, F02D 19/06, F02D 41/00, F02M 25/022, F02M 25/028, F02M 25/03, F02M 25/10

(54) **A SYSTEM FOR CONTROLLING HYDROGEN COMBUSTION IN A HYDROGEN INTERNAL COMBUSTION ENGINE**
SYSTEM ZUR STEUERUNG DER WASSERSTOFFVERBRENNUNG IN EINEM WASSERSTOFFVERBRENNUNGSMOTOR
SYSTÈME DE RÉGLAGE DE COMBUSTION D'HYDROGÈNE DANS UN MOTEUR À COMBUSTION INTERNE À HYDROGÈNE

(43) Date of publication of application: 11.01.2023
(73) Proprietor: Volvo Truck Corporation, 405 08 Göteborg (SE)
(72) Inventor: NEVEU, Jean-Marc, 69800 St priest (FR); SIMON, Lionel, 69003 LYON (FR)
(74) Representative: Germain Maureau

(56) References cited:
- WO-A1-2014/113660
- DE-A1- 102019 110 249
- US-A1- 2009 194 042
- US-A1- 2011 259 306
- US-A1- 2017 114 738
- US-A1- 2020 191 044

## Description

### TECHNICAL FIELD

The invention relates to a system for controlling hydrogen combustion in an internal combustion engine using hydrogen as fuel, a vehicle comprising said system for controlling hydrogen combustion, and a method for controlling hydrogen combustion in a hydrogen internal combustion engine.

The invention can be applied in heavy-duty vehicles, such as trucks, buses and construction equipment. Although the invention will be described with respect to a heavy-duty vehicle, the invention is not restricted to this particular vehicle, but may also be used in other vehicles such as passenger vehicles

### BACKGROUND

Internal combustion engines operate by way of burning a fuel such as diesel or gasoline, in the presence of an oxidant inside a combustion chamber. Therefore, the fuel is transformed into other chemical species or combustion products, such as carbon dioxide (CO₂), water (H₂O) and byproducts such as nitrogen oxides (NOx). Moreover, mechanical and thermal energy are produced. The chemical species or combustion products emitted are released as exhausts gases. In order to reduce NOx emissions, aftertreatment of the exhausts gases are necessary.

The vehicle industry is striving to reduce CO₂ and byproducts emissions. For this purpose, various alternatives to diesel and gasoline have been developed for energizing vehicles. One such alternative is the use of hydrogen as fuel. The chemical energy of the hydrogen reacting with air may be converted into mechanical energy in order to propel the vehicle.

More precisely, hydrogen and air are introduced separately, through intake ports, into the combustion chamber of the internal combustion engine. The chemical reaction mostly produce H₂O at high-temperature and high-pressure. Exhaust gases are released through an exhaust port.

However, the use of hydrogen as a fuel inside a combustion engine present several issues. Hydrogen burns very easily, very fast and at high temperature. Therefore, ignition energy is very low and can induce abnormal combustion, like autoignition and knock, but also backfire from the combustion chamber to the intake ports.

To mitigate these main issues, it is known to operated under extremely lean conditions at air ratios far higher than λ=2 over a wide power range, so the level of NOx emissions is negligible. Even the crude exhaust has significantly lower concentrations of NOx in such a hydrogen-based operation in comparison with emissions of a hydrocarbon-based process following aftertreatment of the exhaust gases. Only if a relatively high power output is required it is necessary to make the fuel-air mixture richer in the range of 1≤λ≤2, which then is associated with a drastic increase in NOx emissions and thus the need for aftertreatment of the exhaust gas. However, this solution is costly.

Another solution is to dilute hydrogen with exhaust gas using a so called exhaust gas recirculation (EGR) unit. But it is not easy to have a sufficient amount of EGR because of the risk of water condensation when cooling and the low enthalpy of the exhaust gases to drive the internal combustion engine. In addition, EGR requires an exhaust gas pumping system which reduces the overall efficiency of the internal combustion engine. Another solution is to dilute hydrogen with water in liquid phase, in order to lower the temperature of the combustion products as well as the temperature of overheated parts. This solution avoid implementing an exhaust gas pumping system in the internal combustion engine. The water is instantly vaporized to steam by igniting hydrogen gas.

In addition, this solution allows decreasing boost efforts by working on lower dilution than with EGR.

To that purpose, a water intake system comprising a water tank connected to the internal combustion engine can be implemented. The water tank has to be filled with water by a vehicle user. US20170114738A1 discloses methods for controlling a vehicle engine to improve engine efficiency by strategically utilizing onboard water condensate collected from a charge air cooler. Documents US 2009/194042 A1, WO 2014/113660 A1, DE 10 2019 110249 A1, US 2020/191044 A1, US 2011/259306 A1 disclose other internal combustion engine systems.

There is room for improvement so that a user does not have to refill a water tank regularly.

### SUMMARY

An object of the invention is to provide a system for controlling hydrogen combustion in a hydrogen internal combustion engine, that solves at least the previous problem of the prior art.

According to a first aspect of the invention, the object is achieved by a hydrogen internal combustion engine system according to claim 1.

By the provision of a hydrogen internal combustion engine system which comprises an exhaust gas collector connected to an exhaust water condenser configured to condense at least a part of water contained in the exhaust gases, water produced by the combustion of hydrogen is reused which save water consumption. Moreover, a user does not need to regularly fill a water tank.

According to one embodiment, the exhaust water condenser is a heat exchanger comprising a cooling source comprising outside air and/or engine coolant.

According to the invention, the exhaust water condenser is configured to condense water from exhaust gases and to cool air for air intake into the combustion chamber. Hereby, the hydrogen internal combustion engine system comprises only one heat exchanger.

According to one embodiment, the exhaust gas collector is connected to an outside air collector in order to mix exhaust gas and outside air. Hereby, the exhaust gases collected are cooled before entering into the heat exchanger.

According to one embodiment, the hydrogen internal combustion engine system comprises an exhaust aftertreatment system (EATS) and the exhaust gas collector (30) is configured to collect exhaust gases after the EATS. Therefore, no filter is needed to remove NOx or other pollutants from the collected exhaust gases.

According to a further embodiment, the hydrogen internal combustion engine system comprises an exhaust aftertreatment system (EATS) and the exhaust gas collector is configured to collect exhaust gases before the EATS.

According to one embodiment, the hydrogen internal combustion engine system comprises a turbocharger for exhaust gases, and the exhaust gas collector is configured to collect exhaust gases before and/or after the turbocharger.

According to one embodiment, the water intake system comprises a water pump.

According to a further embodiment, the water intake system is configured to use pressure delta between the exhaust gas collector and the water injector.

According to one embodiment, the water intake system comprises a filter configured to remove pollutants such as carbon or particulate generated from hydrogen combustion.

According to one embodiment, the water injector is connected to the combustion chamber in order to provide a direct injection of water.

According to one embodiment, the water injector is connected to an admission pipe in order to provide an indirect injection of water.

According to one embodiment, the water intake system comprises valves for controlling water condensation, and an electronic valve control system.

According to another aspect of the invention, the object is achieved by a vehicle according to claim 15.

According to a second aspect of the invention, the object is achieved by a method for controlling hydrogen combustion according to claim 15.

Further advantages and advantageous features of the invention are disclosed in the following description and in the dependent claims.

### BRIEF DESCRIPTION OF THE DRAWINGS

With reference to the appended drawings, below follows a more detailed description of an exemplary embodiment of the invention.

In the drawings:
Fig. 1 is a schematic view of a hydrogen internal combustion engine system according to a first embodiment of the invention,
Fig. 2 is a schematic view of a hydrogen internal combustion engine system according to a second example, not part of the invention, and
Fig. 3 is a schematic view of a hydrogen internal combustion engine system according to a third example, not part of the invention.

### DETAILED DESCRIPTION OF EMBODIMENTS OF THE INVENTION

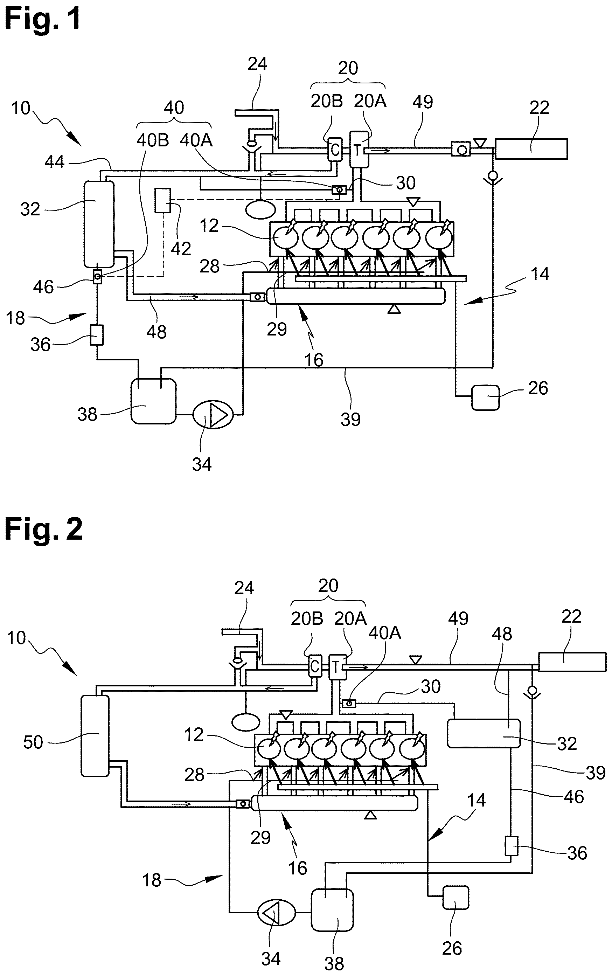

Figures 1 to 3 show a hydrogen internal combustion engine system 10 comprising at least one combustion chamber 12 connected to a hydrogen intake system 14, an air intake system 16 and a water intake system 18 for controlling hydrogen combustion.

The hydrogen internal combustion engine system can comprise a turbocharger 20 for exhaust gases. The turbocharger 20 can comprise a turbine 20A and an air compressor 20B. The turbocharger 20 can be used for compression of outside air that is supplied to combustion chamber 12 through the air intake system 16. The turbocharger 20 can be connected to an Exhaust AfterTreatment System (EATS) 22 configured to remove pollutant such as NOx from the exhaust gases.

The air intake system 16 can be connected to an outside air collector 24 and the hydrogen intake system 14 can be connected to a hydrogen tank 26.

The water intake system 18 comprises an exhaust gas collector 30 connected to an exhaust water condenser 32. The water intake system 18 can comprise at least one water injector 28 configured to inject water directly into the combustion chamber 12 or indirectly through an admission pipe 29.

The exhaust water condenser 32 is configured to condense at least a part of water contained in the exhaust gases. For instance, the exhaust gas condenser 32 is configured to condense one ninth of water produced in the exhaust gases. The exhaust water condenser 32 is a heat exchanger comprising a cooling source. The cooling source can be outside air and/or engine coolant.

The water intake system 18 can comprise a water pump 34. In alternative, the water intake system 18 can be configured to use pressure delta between the exhaust gas collector 30 and the water injector 28.

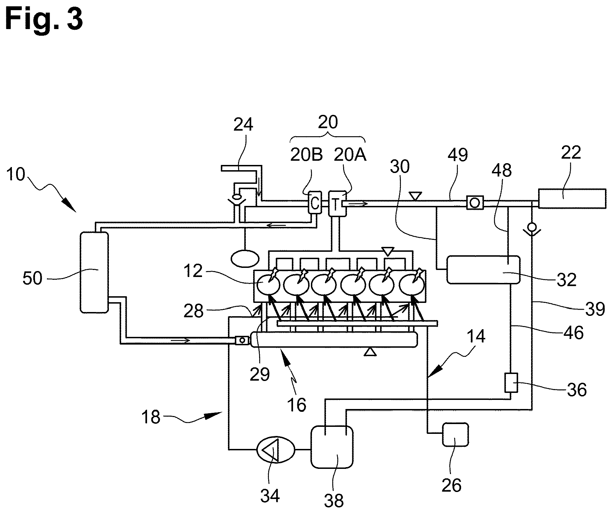

The exhaust gas collector 30 can be configured to collect exhaust gases before the EATS 22. More precisely, the exhaust gas collector 30 can be configured to collect exhaust gases before and/or after the turbocharger 20. For instance, as illustrated in figure 1, the exhaust gas collector 30 is configured to collect exhaust gases before the turbocharger 20. As illustrated in figure 3, the exhaust gas collector 30 is configured to collect exhaust gases after the turbocharger 20. As illustrated in figure 2, the exhaust gas collector 30 is configured to collect exhaust gases before and after the turbocharger 20.

The water intake system 18 can comprise a filter 36 configured to remove pollutants such as carbon or particulate generated from hydrogen combustion. The filter 36 can be disposed after the water exhaust condenser 32.

In a non-represented alternative, the exhaust gas collector 30 can be configured to collect exhaust gases after the EATS 22. Therefore, no filter is needed to remove pollutants such as carbon or particulate generated from hydrogen combustion.

The water intake system 18 can comprise a water tank 38 connected to the exhaust water condenser 32 and to the water injector 28. The water tank 38 is a water reserve which allows not to have continuous condensation. For instance, the water tank 38 has a volume of 50L. Therefore, the water tank 38 enables to control the combustion of 30 to 100 kg of hydrogen into the combustion chamber according to driving cycle. The water tank 38 can be connected to a water tank venting line 39 configured to enable air to be exhausted from the water tank as it is filled with condensed exhaust water. The water tank venting line can be connected to the EATS.

The water intake system 18 can comprise valves 40 for controlling water condensation, such as an exhaust gas valve 40A and/or a water condensed valve 40B. The exhaust gas valve 40A enables to create a pressure drop to drive exhaust gases through the exhaust water condenser 32. The water intake system 18 can comprise an electronic valve control system 42 configured to control the valves 40, as illustrated in figure 1.

If the exhaust gas collector 30 is configured to collect exhaust gases before the EATS 22 and after the turbocharger 20, no exhaust gas valve 40A is needed, as represented un figure 3.

The water intake system 18 can comprise pressure sensors (not represented).

According to a first embodiment, as illustrated in figure 1, the exhaust water condenser 32 is a heat exchanger configured to condense water from exhaust gases and configured to cool outside air configured to be injected into the at least one combustion chamber 12 through the air intake system 16. Hereby, the hydrogen internal combustion engine system 10 comprises only one heat exchanger.

The exhaust gas collector 30 can be connected to the outside air collector 24 in order to mix exhaust gas and outside air. Hereby, the exhaust gases collected are cooled by the outside air before entering into the exhaust water condenser 32 through an inlet pipe 44.

The exhaust water condenser 32 can comprise a water condensed outlet pipe 46 and an exhaust gases outlet pipe 48. The water condensed outlet pipe 46 can be connected to the water injector 28. The exhaust gases outlet pipe 48 can be connected to the air intake system 16.

Water condensation is carried out preferably when there is a favourable thermal balance. That is to say, when there is enough air to cool the hydrogen internal combustion engine system 10 and condense the water.

In this first embodiment, exhaust gases are collected before the turbocharger 20. The back pressure generated by the turbocharger 20 enables to drive easily the exhaust gases. The exhaust gases can be mixed with outside air in the inlet pipe 44 configured to enter into the exhaust water condenser 32. The exhaust gases are cooled in the exhaust water condenser 32 and exhaust water is condensed. Condensed exhaust water can then be driven to the at least one water injector 28 or to the admission pipe 29, through the water condensed outlet pipe 46. Cooled air and cooled exhaust gases are driven to the air intake system 16 through the exhaust gases outlet pipe 48.

More precisely, condensed exhaust water can be driven to the water tank 38 through the water condensed outlet pipe 46. Condensed exhaust water can be filtered before entering into the water tank 38.

As the water tank is filled with condensed exhaust water, the water tank venting line 39 enable air to be exhausted from the water tank 38.

According to a second example, not part of the invention, as illustrated in figure 2 and 3, the exhaust water condenser 32 is a heat exchanger configured to condense water from exhaust gases, and the hydrogen internal combustion engine system 10 can comprise another heat exchanger 50 configured to cool outside air configured to be injected into the at least one combustion chamber 12 through the air intake system 16.

The exhaust gas collector 30 can be connected to the exhaust water condenser 32. As in the first embodiment, the exhaust water condenser 32 can comprise a water condensed outlet pipe 46 and an exhaust gases outlet pipe 48.

The water condensed outlet pipe 46 can be connected to the water injector 28. The exhaust gases outlet pipe 48 can be connected to an exhaust gases pipe 49 configured to drive exhaust gases outside of the vehicle.

As illustrated in figure 2, exhaust gases can be collected before the turbocharger 20 and driven to the exhaust water condenser 32. The exhaust gases are cooled in the exhaust water condenser 32 and exhaust water is condensed. Condensed exhaust water can then be driven to the at least one water injector 28 or to the admission pipe 29, through the water condensed outlet pipe 46.

More precisely, condensed exhaust water can be driven to the water tank 38 through the water condensed outlet pipe 46. Condensed exhaust water can be filtered before entering into the water tank 38.

As the water tank is filled with condensed exhaust water, the water tank venting line 39 enable air to be exhausted from the water tank 38.

As illustrated in figure 3, exhaust gases can be collected after the turbocharger 20 and driven to the exhaust water condenser 32. The exhaust gases are cooled in the exhaust water condenser 32 and exhaust water is condensed. Condensed exhaust water can then be driven to the at least one water injector 28 or to the admission pipe 29, through the water condensed outlet pipe 46.

More precisely, condensed exhaust water can be driven to the water tank 38 through the water condensed outlet pipe 46. Condensed exhaust water can be filtered before entering into the water tank 38.

As the water tank is filled with condensed exhaust water, the water tank venting line 39 enable air to be exhausted from the water tank 38.

## Claims

1. A hydrogen internal combustion engine system (10) comprising a combustion chamber (12) connected to a hydrogen intake system (14), an air intake system (16) and a water intake system (18) for controlling hydrogen combustion, wherein the water intake system (18) comprises an exhaust gas collector (30) connected to an exhaust water condenser (32) configured to condense at least a part of water contained in the exhaust gases, the exhaust water condenser (32) is configured to condense water from exhaust gases and to cool air for air intake (16) into the combustion chamber (12), and the water intake system (18) comprises a water injector (28) configured to inject condensed exhaust water directly into the combustion chamber (12) or to inject condensed exhaust water indirectly into the combustion chamber (12) through an admission pipe (29), **characterized in that** the water intake system (18) includes a water tank (38) connected to the exhaust water condenser (32) and to the water injector (28) including a volume configured to enable control of combustion of 30kg to 100kg of hydrogen in the combustion chamber (12).

2. A hydrogen internal combustion engine system (10) according to claim 1, **characterized in that** the exhaust gas collector (30) is connected to an outside air collector (24) in order to mix exhaust gas and outside air.

3. A hydrogen internal combustion engine system (10) according to any of claims 1 to 2, **characterized in that** it comprises an exhaust aftertreatment system (22) and the exhaust gas collector (30) is configured to collect exhaust gases after the exhaust aftertreatment system (22).

4. A hydrogen internal combustion engine system (10) according to any of claims 1 to 2, **characterized in that** it comprises an exhaust aftertreatment system (22) and the exhaust gas collector (30) is configured to collect exhaust gases before the exhaust aftertreatment system (22).

5. A hydrogen internal combustion engine system (10) according to claim 4, **characterized in that** it comprises a turbocharger (20) for exhaust gases and **in that** the exhaust gas collector (30) is configured to collect exhaust gases before and/or after the turbocharger (20).

6. A hydrogen internal combustion engine system (10) according to any of claims 1 to 5, **characterized in that** the water intake system (18) comprises a water pump (34).

7. A hydrogen internal combustion engine system (10) according to any of claims 1 to 5, **characterized in that** the water intake system (18) is configured to use pressure delta between the exhaust gas collector (30) and the water injector (28).

8. A hydrogen internal combustion engine system (10) according to any of claims 1 to 7, **characterized in that** the water intake system (18) comprises a filter (36) configured to remove pollutants such as carbon or particulate generated from hydrogen combustion.

9. A hydrogen internal combustion engine system (10) according to any of claims 1 to 8, **characterized in that** the water intake system (18) comprises valves (40) for controlling water condensation, and an electronic valve control system (42).

10. A vehicle comprising a hydrogen internal combustion engine system (10) according to any of claims 1 to 9.

11. A method for controlling hydrogen combustion in a hydrogen internal combustion engine system (10) according to any of claims 1 to 9 **characterized by** the steps of:
- Collecting exhaust gases via the exhaust gas collector (30) ;
- Condensing water from the exhaust gases and cooling air for air intake into the combustion chamber, via the exhaust water condenser (32).

## Patentansprüche

1. Wasserstoff-Verbrennungsmotorsystem (10), das eine Brennkammer (12), die mit einem Wasserstoffeinlasssystem (14) verbunden ist, ein Lufteinlasssystem (16) und ein Wassereinlasssystem (18) zur Steuerung der Wasserstoffverbrennung umfasst, wobei das Wassereinlasssystem (18) einen Abgassammler (30) umfasst, der mit einem Abgaswasserkondensator (32) verbunden ist, der so eingerichtet ist, dass er mindestens einen Teil des in den Abgasen enthaltenen Wassers kondensiert, der Abgaswasserkondensator (32) so eingerichtet ist, dass er Wasser aus Abgasen kondensiert und Luft für den Lufteinlass (16) in die Brennkammer (12) kühlt, und das Wassereinlasssystem (18) eine Wassereinspritzvorrichtung (28) umfasst, die so eingerichtet ist, dass sie kondensiertes Abgaswasser direkt in die Brennkammer (12) einspritzt ode kondensiertes Abgaswasser indirekt durch ein Zuströmrohr (29) in die Brennkammer (12) einspritzt, **dadurch gekennzeichnet, dass** das Wassereinlasssystem (18) einen Wassertank (38) umfasst, der mit dem Abgaswasserkondensator (32) und der Wassereinspritzvorrichtung (28) verbunden ist und ein Volumen enthält, das so eingerichtet ist, dass es die Steuerung der Verbrennung von 30 kg bis 100 kg Wasserstoff in der Brennkammer (12) ermöglicht.

2. Wasserstoff-Verbrennungsmotorsystem (10) nach Anspruch 1, **dadurch gekennzeichnet, dass** der Abgassammler (30) mit einem Außenluftsammler (24) verbunden ist, um Abgas und Außenluft zu mischen.

3. Wasserstoff-Verbrennungsmotorsystem (10) nach einem der Ansprüche 1 bis 2, **dadurch gekennzeichnet, dass** es ein Abgasnachbehandlungssystem (22) umfasst und der Abgassammler (30) so eingerichtet ist, dass er Abgase nach dem Abgasnachbehandlungssystem (22) sammelt.

4. Wasserstoff-Verbrennungsmotorsystem (10) nach einem der Ansprüche 1 bis 2, **dadurch gekennzeichnet, dass** es ein Abgasnachbehandlungssystem (22) umfasst und der Abgassammler (30) so eingerichtet ist, dass er Abgase vor dem Abgasnachbehandlungssystem (22) sammelt.

5. Wasserstoff-Verbrennungsmotorsystem (10) nach Anspruch 4, **dadurch gekennzeichnet, dass** es einen Turbolader (20) für Abgase umfasst und dass der Abgassammler (30) so eingerichtet ist, dass er Abgase vor und/oder nach dem Turbolader (20) sammelt.

6. Wasserstoff-Verbrennungsmotorsystem (10) nach einem der Ansprüche 1 bis 5, **dadurch gekennzeichnet, dass** das Wassereinlasssystem (18) eine Wasserpumpe (34) umfasst.

7. Wasserstoff-Verbrennungsmotorsystem (10) nach einem der Ansprüche 1 bis 5, **dadurch gekennzeichnet, dass** das Wassereinlasssystem (18) so eingerichtet ist, dass es eine Druckdifferenz zwischen dem Abgassammler (30) und der Wassereinspritzvorrichtung (28) nutzt.

8. Wasserstoff-Verbrennungsmotorsystem (10) nach einem der Ansprüche 1 bis 7, **dadurch gekennzeichnet, dass** das Wassereinlasssystem (18) einen Filter (36) umfasst, der so eingerichtet ist, dass er Schadstoffe wie Kohlenstoff oder Partikel entfernt, die durch die Wasserstoffverbrennung erzeugt werden.

9. Wasserstoff-Verbrennungsmotorsystem (10) nach einem der Ansprüche 1 bis 8, **dadurch gekennzeichnet, dass** das Wassereinlasssystem (18) Ventile (40) zur Steuerung der Wasserkondensation und ein elektronisches Ventilsteuersystem (42) umfasst.

10. Fahrzeug, das ein Wasserstoff-Verbrennungsmotorsystem (10) nach einem der Ansprüche 1 bis 9 umfasst.

11. Verfahren zur Steuerung der Wasserstoffverbrennung in einem Wasserstoff-Verbrennungsmotorsystem (10) nach einem der Ansprüche 1 bis 9, **gekennzeichnet durch** die Schritte:
- Sammeln der Abgase über den Abgassammler (30);
- Kondensieren von Wasser aus den Abgasen und Kühlen von Luft für den Lufteinlass in die Brennkammer über den Abgaswasserkondensator (32).

## Revendications

1. Système de moteur à combustion interne à hydrogène (10) comprenant une chambre de combustion (12) reliée à un système d'admission d'hydrogène (14), un système d'admission d'air (16) et un système d'admission d'eau (18) pour régler la combustion de l'hydrogène, dans lequel le système d'admission d'eau (18) comprend un collecteur de gaz d'échappement (30) relié à un condenseur d'eau d'échappement (32) configuré pour condenser au moins une partie de l'eau contenue dans les gaz d'échappement, le condenseur d'eau d'échappement (32) est configuré pour condenser l'eau provenant des gaz d'échappement et pour refroidir l'air pour l'admission d'air (16) dans la chambre de combustion (12), et le système d'admission d'eau (18) comprend un injecteur d'eau (28) configuré pour injecter l'eau d'échappement condensée directement dans la chambre de combustion (12) ou pour injecter l'eau d'échappement condensée indirectement dans la chambre de combustion (12) par l'intermédiaire d'un tuyau d'admission (29), **caractérisé en ce que** le système d'admission d'eau (18) comprend un réservoir d'eau (38) relié au condenseur d'eau d'échappement (32) et à l'injecteur d'eau (28), comprenant un volume configuré pour permettre le réglage de la combustion de 30 kg à 100 kg d'hydrogène dans la chambre de combustion (12).

2. Système de moteur à combustion interne à hydrogène (10) selon la revendication 1, **caractérisé en ce que** le collecteur de gaz d'échappement (30) est relié à un collecteur d'air extérieur (24) afin de mélanger le gaz d'échappement et l'air extérieur.

3. Système de moteur à combustion interne à hydrogène (10) selon l'une des revendications 1 et 2, **caractérisé en ce qu'**il comprend un système de post-traitement de gaz d'échappement (22) et **en ce que** le collecteur de gaz d'échappement (30) est configuré pour collecter les gaz d'échappement après le système de post-traitement de gaz d'échappement (22).

4. Système de moteur à combustion interne à hydrogène (10) selon l'une des revendications 1 et 2, **caractérisé en ce qu'**il comprend un système de post-traitement de gaz d'échappement (22) et **en ce que** le collecteur de gaz d'échappement (30) est configuré pour collecter les gaz d'échappement avant le système de post-traitement de gaz d'échappement (22).

5. Système de moteur à combustion interne à hydrogène (10) selon la revendication 4, **caractérisé en ce qu'**il comprend un turbocompresseur (20) pour les gaz d'échappement et **en ce que** le collecteur de gaz d'échappement (30) est configuré pour collecter les gaz d'échappement avant et/ou après le turbocompresseur (20).

6. Système de moteur à combustion interne à hydrogène (10) selon l'une des revendications 1 à 5, **caractérisé en ce que** le système d'admission d'eau (18) comprend une pompe à eau (34).

7. Système de moteur à combustion interne à hydrogène (10) selon l'une des revendications 1 à 5, **caractérisé en ce que** le système d'admission d'eau (18) est configuré pour utiliser un delta de pression entre le collecteur de gaz d'échappement (30) et l'injecteur d'eau (28).

8. Système de moteur à combustion interne à hydrogène (10) selon l'une des revendications 1 à 7, **caractérisé en ce que** le système d'admission d'eau (18) comprend un filtre (36) configuré pour éliminer les polluants tels que le carbone ou les particules générés par la combustion de l'hydrogène.

9. Système de moteur à combustion interne à hydrogène (10) selon l'une des revendications 1 à 8, **caractérisé en ce que** le système d'admission d'eau (18) comprend des soupapes (40) pour régler la condensation de l'eau, et un système de commande électronique des soupapes (42).

10. Véhicule comprenant un système de moteur à combustion interne à hydrogène (10) selon l'une des revendications 1 à 9.

11. Procédé de réglage de la combustion d'hydrogène dans un système de moteur à combustion interne à hydrogène (10) selon l'une des revendications 1 à 9, **caractérisé par** les étapes de :
- collecte des gaz d'échappement par l'intermédiaire du collecteur de gaz d'échappement (30) ;
- condensation de l'eau provenant des gaz d'échappement et refroidissement de l'air pour l'admission d'air dans la chambre de combustion, par l'intermédiaire du condenseur d'eau d'échappement (32).
